# EUROPEAN PATENT APPLICATION

(11) **EP 3 336 772 A1**
(43) Date of publication of application: **20.06.2018**
(21) Application number: 17191385.8
(22) Date of filing: 15.09.2017
(51) Int. Cl.: G06K 17/00, G06K 1/20

(54) **RFID READER/WRITER AND CONTROL PROGRAM**

(30) Priority: 14.12.2016 JP 2016242635
(71) Applicant: Toshiba TEC Kabushiki Kaisha, Tokyo 141-8562 (JP)
(72) Inventor: HORI, Fusao, Shinagawa-ku,, Tokyo 141-8562 (JP)
(74) Representative: Takeuchi, Maya

(57) **Abstract**

A reader/writer apparatus includes a roller to transport a sheet along a transport path. The sheet can labels disposed thereon spaced from each other. Each label includes a wireless tag, such as an RFID tag. A wireless tag reader has an antenna disposed on the transport path and reads identification data from wireless tags when the sheet is being transported. A processor operates to store the identification data read by wireless tag reader in association with a signal intensity of a response signal from the wireless tag and a position of the sheet on the transport path at the time of the reading of the wireless tag. A position of the sheet on the transport path for each wireless tag can be specified for writing data into the wireless tags based on peak signal intensity associated with identification data.

## Description

### FIELD

An embodiment described herein relates generally to an RFID reader/writer and a control program for a RFID reader/writer.

### BACKGROUND

In the related art, for managing goods such as store merchandise, radio frequency identification (RFID) tags (also referred to as IC tags) are attached to the goods. In this method of managing goods, the goods to which the RFID tag is attached can be distinguished by reading data from the RFID tag using an RFID reader/writer.

In addition, in the related art, in some cases, an RFID tag is included on a printable label. For example, the label is formed of a printable medium, such as thermal paper, and several labels may be spaced from each other on a continuous base sheet at predetermined intervals. A user prints information relating to the goods on the labels using a printer, and then writes identification information, using an RFID reader/writer, to an RFID tag added to each label. In this way, a user can perform the goods management using an RFID tag attached to a pre-printed label that is then affixed to the goods.

For satisfactory data writing to the RFID tag, it is generally necessary to adjust conditions for writing such as a positional relationship between an antenna of the RFID reader/writer and the RFID tag. Particularly, when a plurality of RFID tags are arranged at predetermined intervals, since the adjacent RFID tags can be influenced, the positional relationship between the antenna and the particular RFID tag being written is an important factor for satisfactory data writing.

Therefore, in the related art, when writing the data into the RFID tag provided on a label as described above, the write conditions are specified while the user manually adjusts the positional relationship between the antenna and the RFID tag. However, the work required for the manual adjustment is complicated and inefficient.

To solve the above-cited problem, there is provided a wireless tag reader/writer apparatus, comprising: a roller configured to transport a sheet along a transport path, the sheet having a plurality of labels disposed thereon, each label being spaced from an adjacent label in the plurality of labels at a predetermined spacing along a transport direction of the sheet along the transport path, each label including a wireless tag; a wireless tag reader including an antenna disposed on the transport path and configured to read identification data from the wireless tag included in a label of the plurality of labels when the sheet is transported along the transport path; a processor configured: to store the identification data of the wireless tag read by wireless tag reader in association with a signal intensity of a response signal of the wireless tag, and a position of the sheet on the transport path at the time of the reading of the wireless tag by the wireless tag reader; and to specify a position of the sheet on the transport path for each wireless tag for writing data into the wireless tags, the position of the sheet being specified based on peak positions of the signal intensity in the response signal of each wireless tag stored in association with identification data.

The wireless tag reader may further include: an interrogation wave output unit configured to output an interrogation wave via the antenna while the sheet is being transported on the transport path; and a tag writer configured to write identification data into wireless tags included in the plurality of labels in a tag sequence matching a response order of the wireless tags to the interrogation wave.

Preferably, an arrangement order of the wireless tags based on order of appearance of the peak positions of the signal intensity for each wireless tag is stored by the processor in association with the identification data for each wireless tag.

Preferably, an output power of the antenna is stored by the processor in association with the identification data for each wireless tag.

Preferably, the sheet is transported along the transport path by an intermittent operation of the transport roller to temporarily stop the sheet along the transport path, and the wireless tag reader reads the identification data from the wireless tags while the sheet is temporarily stopped.

The wireless rag reader/writer apparatus may further comprise: a sensor along the transport path configured to detect at least one of a front end of the sheet and a front end of a label in the plurality of labels disposed on the sheet.

The wireless tag reader/writer apparatus may further comprise: a printer configured to print on the plurality of labels on the sheet.

Preferably, the printer is thermal printer.

Preferably, the wireless tag is an RFID tag.

Preferably, the sheet is fed from a roll.

The present invention further relates to a non-transitory computer readable medium storing program instructions for a wireless tag reader/writer apparatus that when executed by the wireless tag reader/writer apparatus cause: a transport roller to transport a sheet along a transport path, the sheet having a plurality of labels disposed thereon, each label being spaced from an adjacent label in the plurality of labels at a predetermined spacing along a transport direction of the sheet along the transport path, each label including a wireless tag; a wireless tag reader, including an antenna disposed on the transport path, to read identification data from a wireless tag included in a label of the plurality of labels when the sheet is transported along the transport path; and a processor to: store the identification data of the wireless tag read by wireless tag reader in association with a signal intensity of a response signal of the wireless tag, and a position of the sheet on the transport path at the time of the reading of the wireless tag by the wireless tag reader, and specify a position of the sheet on the transport path for each wireless tag for writing data into the wireless tags, the position of the sheet being specified based on peak positions of the signal intensity in the response signal of each wireless tag stored in association with identification data.

Preferably, the program instructions when executed by the wireless tag reader/writer apparatus further cause: the wireless tag reader to output an interrogation wave via the antenna while the sheet is being transported on the transport path; and a tag writer to write identification data into wireless tags included in the plurality of labels in a tag sequence matching a response order of the wireless tags to the interrogation wave.

Preferably, an arrangement order of the wireless tags based on order of appearance of the peak positions of the signal intensity for each wireless tag is stored by the processor in association with the identification data for each wireless tag.

Preferably, the program instructions when executed by the wireless tag reader/writer apparatus cause: the sheet to be transported along the transport path by an intermittent operation of the transport roller so as to temporarily stop the sheet along the transport path, and the wireless tag reader to read the identification data from the wireless tags while the sheet is temporarily stopped.

Preferably, the program instructions when executed by the wireless tag reader/writer apparatus further cause: a sensor on the transport path to detect at least one of a front end and a rear end of the sheet, and a front end and a rear end of each label on the sheet.

The present invention further relates to a method for writing data to a plurality of radio frequency identification (RFID) tags, comprising: transporting a medium supporting a plurality of RFID tags along transport path in a transport direction; reading identification data of each RFID tag in the plurality of RFID tags by outputting an interrogation wave via an antenna disposed along a portion of the transport path, while the sheet is being transported along the transport path; storing the identification data read from each RFID tag in the plurality of RFID tags in association with a radio wave intensity received from the RFID tag at the time of the reading and a position of the sheet on the transport path at the time of the reading; and specifying a position of the sheet on the transport path for writing data into a particular RFID tag in the plurality of RFID tags based on a peak position of the radio wave intensity associated with the identification data of the particular RFID tag.

The method may further comprise: writing data into the plurality of RFID tags, via the antenna, in an order corresponding to a sequence in which the RFID tags in the plurality of RFID tags responded to the interrogation wave.

The method may further comprise: specifying an output power of the antenna when writing of data into each RFID tag in the plurality of RFID tags based on the radio wave intensity associated with the RFID tag.

Preferably, the sheet is repeatedly transported along the transport pathway for a predetermined distance followed by a temporary pause, and the RFID reader reads the identification data while the sheet transport along the transport path is temporarily paused.

The method may further comprise: verifying the position of the sheet on the transport path before writing data into each RFID tag in the plurality of RFID tag.

### BRIEF DESCRIPTION OF THE DRAWINGS

Fig. 1 is a schematic diagram illustrating a general structure of a printer.
Fig. 2 is a diagram illustrating an example of paper.
Fig. 3 is a diagram illustrating an example of a control system of a printer.
Fig. 4 is a diagram illustrating an example of a functional configuration of a printer.
Fig. 5 is a flowchart illustrating an example of write condition specification processing performed by a printer.
Fig. 6 is a schematic diagram illustrating an example of response characteristics data.
Fig. 7 is a schematic diagram illustrating an example of write condition data.
Fig. 8 is a flowchart illustrating an example of write condition verification processing performed by a printer.

### DETAILED DESCRIPTION

In general, according to an embodiment, a wireless tag reader/writer apparatus includes a roller configured to transport a sheet along a transport path. The sheet has a plurality of labels disposed thereon, each label being spaced from an adjacent label in the plurality of labels at a predetermined spacing along a transport direction of the sheet along the transport path. Each label includes a wireless tag, for example an RFID tag. A wireless tag reader includes an antenna disposed on the transport path and is configured to read identification data from the wireless tag included in a label of the plurality of labels when the sheet is transported along the transport path. A processor is configured: to store the identification data of the wireless tag read by wireless tag reader in association with a signal intensity of a response signal of the wireless tag, and a position of the sheet on the transport path at the time of the reading of the wireless tag by the wireless tag reader; and to specify a position of the sheet on the transport path for each wireless tag for writing data into the wireless tags, the position of the sheet being specified based on peak positions of the signal intensity in the response signal of each wireless tag stored in association with identification data.

Hereinafter, an RFID reader/writer and a program will be described with reference to the drawings. The description will be made of an example in which an RFID reader/writer is applied to a printer that can read and/or write RFID tags.

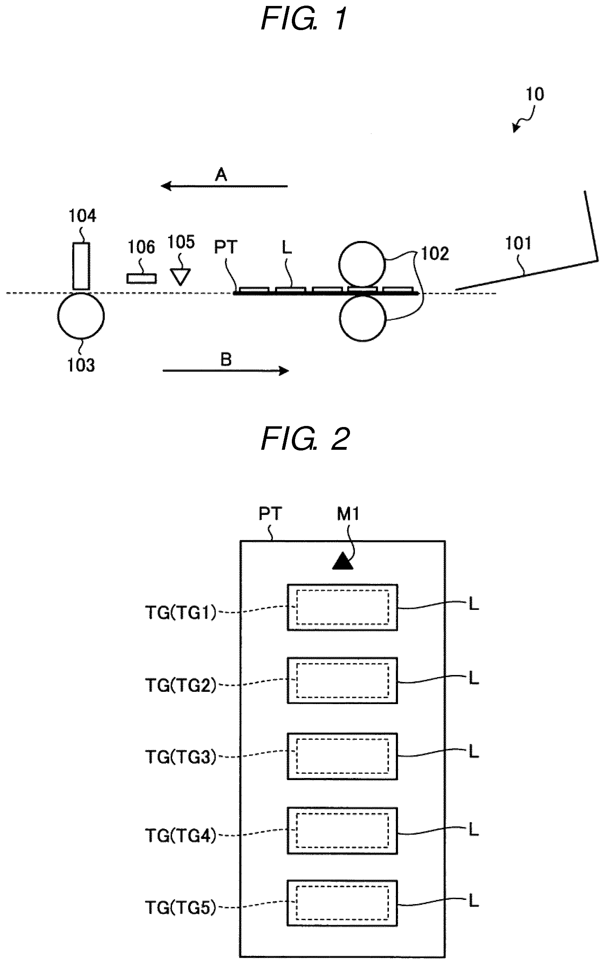

Fig. 1 is a schematic diagram illustrating a general structure of a printer 10. As illustrated in FIG. 1, the printer 10 includes a paper storage unit 101, a transport roller 102, a platen roller 103, a thermal head 104, a sensor 105, and an antenna 106.

The paper storage unit 101 stores paper PT. The paper PT is a sheet-shaped medium that supports a label L, formed of thermal paper, for example. The base sheet of paper PT is formed of non-thermal paper, for example.

Fig. 2 is a diagram illustrating an example of the paper PT. As illustrated in Fig. 2, a plurality of labels L are arranged on the paper PT at intervals. Passive type RFID tags TG (dashed line portion) are included on each label L, and various data items can be written therein. In addition, each label L is attached to the paper PT so as to be detachable (e.g., peelable) from the paper PT.

The paper PT is stored in the paper storage unit 101 with the labels L arranged in a transport direction of the paper PT. The paper PT is transported sheet by sheet on a transport path (dashed line portion in Fig. 1) from the paper storage unit 101 to the thermal head 104 (and antenna 106) by a transport mechanism such as the transport roller 102. A mark M1 illustrated in Fig. 2 indicates the transport direction of the paper PT when the paper PT is stored in the paper storage unit 101, and indicates a front end of the paper PT.

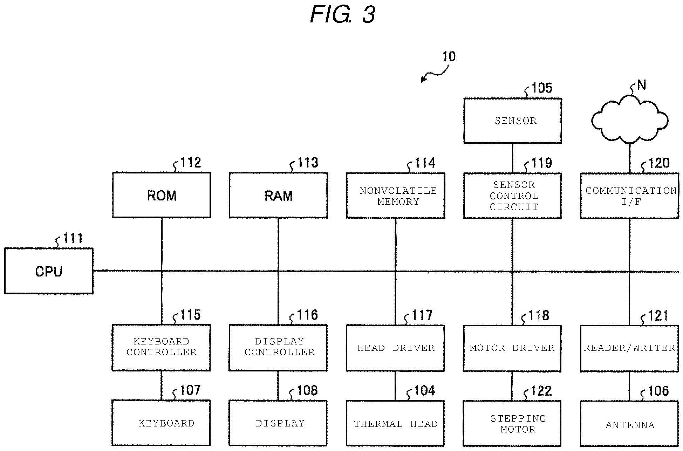

The transport roller 102 is disposed on the transport path of the paper PT, and is rotationally driven by a stepping motor 122 (refer to Fig.3). The transport roller 102 together with other aspects of a transport mechanism (not illustrated) pulls out the paper PT from the paper storage unit 101, and transports the paper PT in the transport direction A toward the thermal head 104 (and antenna 106).

The platen roller 103 is disposed on the transport path of the paper PT, and is rotationally driven by the stepping motor (refer to Fig. 3) or the like. The platen roller 103 transports the paper PT toward a paper outlet (not illustrated) by transporting the paper PT along the transport direction A. The transport roller 102 and the platen roller 103 can transport the paper PT in the transport direction A, which may also be referred to as a forward direction, and can also transport the paper PT in a transport direction B, which may also be a reverse direction, by reversing the direction of the rotations.

The thermal head 104 is disposed so as to face the platen roller 103. The thermal head 104 is configured in such a manner that heating elements are arranged in a row at a plurality of predetermined densities. The thermal head 104 generates heats on the heating elements based on a control by a head driver 117 (refer to Fig. 3), and prints characters or figures on the label L by heating the transported paper PT.

The sensor 105 is, for example, a transmission type or a reflection type sensor device. The sensor 105 is provided on the transport path of the paper PT, and is provided, for example, at the front side of the antenna 106 in the transport direction A. The sensor 105 detects the front edge and a rear end of the transported paper PT. In addition, the sensor 105 detects the front ends and the rear ends of the labels L attached on the paper PT and gaps between the labels L.

The antenna 106 is an antenna device for communicating with the RFID tags TG. The antenna 106 is provided on the transport path of the paper PT, and is provided, for example, before the thermal head 104 along the transport direction A. The antenna 106 performs data reading and data writing from and into the RFID tag TGs by outputting an electric field or a radio wave (hereinafter, simply referred to as a radio wave) under the control by a reader/writer 121 (refer to Fig. 3).

Next, a control system of the printer 10 will be described with reference to Fig. 3. Fig. 3 is a diagram illustrating an example of the control system of the printer 10.

As illustrated in Fig. 3, the printer 10 includes a computer including a central processing unit (CPU) 111, read only memory (ROM) 112, and random access memory (RAM) 113. The CPU 111 is a processor and manages a control of the printer 10. The ROM 112 stores various programs executed by the CPU 111 and control information items. The RAM 113 functions as a work area for the CPU 111.

In addition, in the printer 10, a nonvolatile memory 114, a keyboard controller 115, a display controller 116, and a head driver 117 are connected to the CPU 111. In the printer 10, a keyboard 107 is connected to the keyboard controller 115, a display 108 is connected to the display controller 116, and the thermal head 104 is connected to the head driver 117.

The nonvolatile memory 114 is a storage medium such as a flash memory, and stores various programs executed by the CPU 111 and various set information items. The keyboard controller 115 outputs an operation signal in accordance with an operation of the keyboard 107 to CPU 111. The display controller 116 causes the display 108 to display various information items under the control by the CPU 111. The head driver 117 causes the thermal head 104 (heating elements) to generate the heat under the control by the CPU 111.

In addition, in the printer 10, a motor driver 118, a sensor control circuit 119, a communication interface (I/F) 120, and the reader/writer 121 are respectively connected to the CPU 111.

The motor driver 118 rotationally operates the transport roller 102 and platen roller 103 controlled by the CPU 111, by controlling the stepping motor 122 which is a drive source of the transport roller 102 and the platen roller 103.

The sensor control circuit 119 operates the sensor 105 and acquires a result of detection by the sensor 105 controlled by the CPU 111. The communication interface 120 is a wired or a wireless communication device and performs communication with an external device connected to a network N such as a local area network (LAN).

The reader/writer 121 performs the data reading and data writing from and into the RFID tag TG via the antenna 106 controlled by the CPU 111.

An initial state of the RFID tags TG is null (empty) or having uniform initial data items, such as manufacturing date and time. In general, the user can write any arbitrary data into the RFID tag TG by overwriting the initial data.

To perform the satisfactory data writing into the RFID tag TG, it can be necessary to adjust a condition for writing (hereinafter, referred to as a write condition) such as a positional relationship between the antenna 106 and the RFID tag TG to be written with data. Particularly, since adjacent RFID tags TG as illustrated in FIG. 2 can be influenced by each other when provided in proximity to each other, the position relationship between the antenna 106 and each RFID tag TG is an important factor for satisfactory data writing.

Therefore, in the related art, when writing the data into the RFID tag TG on the label L, the user will manually adjust the position relationship between the antenna 106 and the RFID tag TG being written. For example, the user covers the areas other than the particular writing target label L from among a plurality of labels L arranged on the paper PT with a radio wave shielding material or the like, and then, specifies a position suitable for writing (hereinafter, referred to as a writing position) while manually adjusting the position relationship between the antenna 106 and the RFID tag TG. However, there is a problem in that the work for the manual adjustment is complicated and inefficient.

However, the printer 10 includes a functional unit that can automatically specify the write condition such as the writing position of the RFID tag TG with respect to the antenna 106.

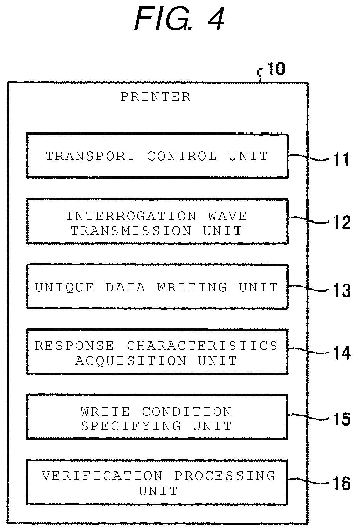

Hereinafter, the functional aspects included in the printer 10 will be described. Fig. 4 is a diagram illustrating an example of the functional configuration of the printer 10.

As illustrated in Fig. 4, the printer 10 includes a transport control unit 11, an interrogation wave transmission unit 12, a unique data writing unit 13, a response characteristics acquisition unit 14, a write condition specifying unit 15, and a verification processing unit 16 as functional units. All or a part of these units may have software configurations realized on the RAM 113 by cooperation of the CPU 111 and the programs stored in the ROM 112 and the nonvolatile memory 114. In addition, all or a part of these units may have hardware configurations realized by one or a plurality of processing circuits.

The transport control unit 11 controls the transport process or a transport speed of the paper PT by cooperating with the motor driver 118. Specifically, when the front end of the paper PT is detected by the sensor 105, the transport control unit 11 controls the transport speed of the paper PT to be a speed at which the read / write of the RFID tag TG can be performed.

For example, as the read / write speed, the transport control unit 11 may transport the paper PT at a constant speed at which the read / write of the RFID tag TG can be performed. In addition, for example, as the read / write speed, the transport control unit 11 may repeat an intermittent transport in which a predetermined amount of paper PT is transported, followed by a temporary pause of the transport. In the repeated intermittent transports, the read / write of the RFID tag TG can be performed while the transport of the paper PT is temporarily paused. It is preferable that the amount of the paper PT transported per one intermittent transport be smaller than a width of the label L in the arrangement direction (transport direction), that is, smaller than the arrangement interval of the RFID tags TG.

The interrogation wave transmission unit 12 outputs a radio wave for the data reading from the paper PT being transported on the transport path from the antenna 106 by cooperating with the reader/writer 121.

The unique data writing unit 13 writes data that can be used to uniquely distinguish each RFID tag TG from the other RFID tag TG in sequence by cooperating with the reader/writer 121. The unique data is not particularly limited, and may be, for example, numerical values with a predetermined number of digits counted up in ascending order. It is preferable that the unique data be a unique numerical value for all RFID tags TG disposed on the paper PT.

The response characteristics acquisition unit 14 reads the unique data from the paper PT (being transported on the transport path) by cooperating with the reader/writer 121. In addition, the response characteristics acquisition unit 14 acquires a radio wave intensity of a response wave output from the RFID tag TG when the unique data is read, by cooperating with the reader/writer 121. The response characteristics acquisition unit 14 records a set of the unique data and the radio wave intensity, obtained by a prior reading, as the response characteristics data in association with a transport position of the paper PT at the time of reading.

Here, the transport position is information indicating a specific position of the paper PT on the transport path. For example, the transport position can be expressed as an amount of transport (e.g., distance) from a reference position set by the front end of the paper PT being detected by the sensor 105 as the reference position. The reference position is not limited to the front end of the paper PT, and another position may be set as the reference position. For example, the front end of each label L may be set as the reference position.

The write condition specifying unit 15 specifies the write condition for each RFID tag TG based on the response characteristics data acquired by the response characteristics acquisition unit 14. Specifically, the write condition specifying unit 15 specifies the arrangement order of the RFID tags TG arranged on the paper PT, the writing position, and the radio wave intensity (hereinafter, referred to as an output power) of the antenna 106 at the time of writing data. The write condition specifying unit 15 generates write condition data associated with the arrangement order, the writing position, and the output power specified for each RFID tag TG, and outputs the write condition data to the RAM 113 and the nonvolatile memory 114.

The verification processing unit 16 performs write condition verification processing for verifying the write condition of each RFID tag TG as specified by the write condition specifying unit 15 by cooperating with the transport control unit 11, the interrogation wave transmission unit 12, the unique data writing unit 13, the response characteristics acquisition unit 14, and the write condition specifying unit 15.

Specifically, the verification processing unit 16 transports again the paper PT (hereinafter, referred to as verification paper) into which the unique data has been written on the transport path, and acquires the response characteristics data from the radio wave intensity of the unique data that is read while the verification paper is being transported. From the acquired response characteristics data, the verification processing unit 16 specifies the arrangement order, the writing position, the output power of each RFID tag TG as the write condition for the reference. Subsequently, the verification processing unit 16 compares the write condition for the reference specified for each RFID tag TG by the verification processing unit 16 and the write condition of the corresponding RFID tag TG specified by the write condition specifying unit 15 and recorded in the RAM 113 and the nonvolatile memory 114. When the write conditions do not coincide with each other, the verification processing unit 16 corrects the write conditions based on the write condition for the reference.

The verification processing unit 16 may urge the user to prepare for the transport of the verification paper by displaying a message or the like instructing the user to store the verification paper in the paper storage unit 101 on the display 108. In addition, the specification and the verification of the write condition may be continuously performed by transporting the paper PT for specifying the write condition in transport direction A, and then, transporting the paper PT in transport direction B as the verification paper. In this case, the sensor 105 performs sensing from the rear end side to the front end side of the verification paper. However, is possible to obtain the response characteristics data similar to that in a case of transport in the transport direction A, by reversing the coordinate system of the response characteristics data obtained at the time of verification in the transport direction.

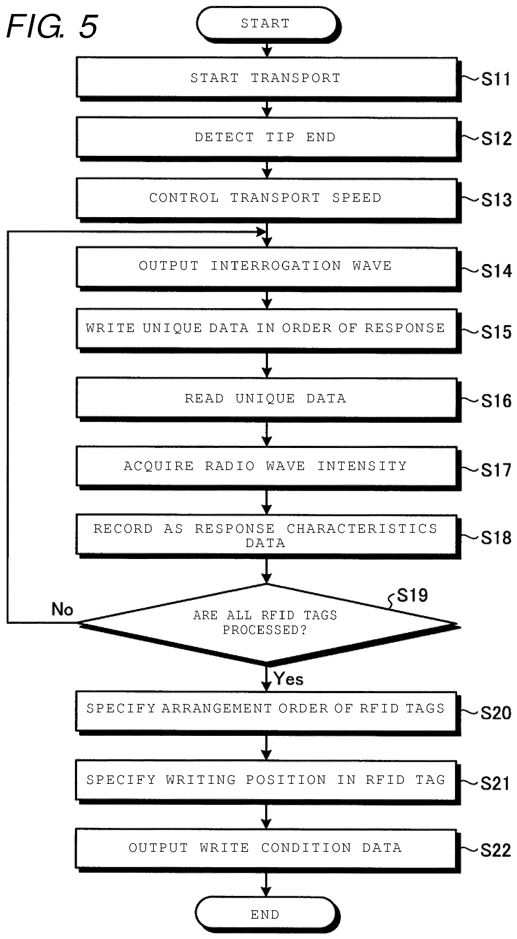

The operation of the printer 10 will be described below. Fig. 5 is a flowchart illustrating an example of the write condition specification processing performed by the printer 10. As a premise of this processing, the paper PT in the initial state is stored in the paper storage unit 101.

First, the transport control unit 11 transports the paper PT stored in the paper storage unit 101 on the transport path (S11). When the front end of the paper PT is detected by the sensor 105 (S12), the transport control unit 11 controls the transport speed of the paper PT to be the read / write speed (S13).

Subsequently, the interrogation wave transmission unit 12 outputs a radio wave for the data reading from the antenna 106 (S14). When a response to this interrogation wave is received by the antenna 106, the unique data writing unit 13 writes the unique data into the RFID tags TG in response to the interrogation wave (S15).

Subsequently, the response characteristics acquisition unit 14 reads the unique data from the RFID tag TG (S16) and acquires the radio wave intensity of the response wave output from the RFID tag TG at the time of reading (S17). The response characteristics acquisition unit 14 further records a set of the unique data and the radio wave intensity as the response characteristics data in association with the transport position of the paper PT at the time of reading the unique data (S18).

It is preferable to continuously perform the processes in at least S16 to S18 among S14 to S18 described above. In addition, as for the read / write speed, when the paper PT is intermittently transported, it is preferable that the processes in S14 to S18 be performed while the transport is temporarily paused, and that the transport be restarted after finishing the processes in S14 to S18.

Subsequently, the response characteristics acquisition unit 14 determines whether or not the response characteristics data for all the RFID tags TG have been recorded (S19). Here, the determination criteria can be adopted in various forms. For example, the response characteristics acquisition unit 14 determines that the response characteristics data for all the RFID tags TG have been recorded under a condition that a predetermined time has elapsed after the rear end of the paper PT has been detected by the sensor 105. It is preferable that the predetermined time be determined according to a distance between the sensor 105 and the antenna 106 and the transport speed of the paper PT.

In S19, when it is determined that the non-processed RFID tags TG are present (No in S19), the response characteristics acquisition unit 14 returns the process to S14. In this case, the unique data writing unit 13 writes the unique data into the RFID tag TG in which the unique data is not written (that is, the RFID tag TG holding the initial data among the RFID tags TG that responds to the interrogation wave in S15), in the order that the RFID tag responds to the interrogation wave.

When it is determined that the response characteristics data for all the RFID tags TG are recorded (Yes in S19), the response characteristics acquisition unit 14 proceeds the process to S20. As described above, the printer 10 acquires the response characteristics data for all the RFID tags TG arranged on the paper PT by repeatedly performing the processes in S 14 to S18.

Subsequently, the write condition specifying unit 15 specifies the arrangement order of the RFID tags TG arranged on the paper PT based on the response characteristics data acquired by the processes described above (S20). In addition, the write condition specifying unit 15 specifies the write condition such as the writing position in the RFID tag TG with respect to the antenna 106 and the output power from the antenna 106 based on the response characteristics data for each RFID tag TG (S21). The write condition specifying unit 15 generates and outputs the write condition data indicating the result of processes in S20 and S21 (S22).

Here, the processes in S20 and S21 will be described. In the processes in S14 to S18 described above, the antenna 106 outputs the radio wave to the paper PT transported in the transport direction A. That is, the antenna 106 communicates with each RFID tag TG from the front end side to the rear end side of the paper PT. At this time, the RFID tag TG does not always respond in the arrangement order of the RFID tags TG arranged on the paper PT, and in some cases, the response is made with the responding order changed.

For example, the RFID tags TG are assumed to be arranged in the order of RFID tag TG1, TG2, TG3, and so forth from the front end side of the paper PT in the transport direction A (refer to Fig. 2). In some cases, when the interrogation wave is output from the antenna 106, the RFID tag TG2 responds first and the RFID tag TG1 responds next, and the RFID tag TG3 responds next. As described above, the RFID tag TG does not always respond in the arrangement order of the RFID tags TG arranged on the paper PT. Therefore, if the writing position is set to the position where simply the communication can be performed, there is a possibility that the data writing cannot be satisfactorily performed.

Therefore, in the printer 10, the unique data is written into the RFID tag TG in order from the RFID tag TG2 that responds to the interrogation wave first in the processes in S14 and S15. Next, the printer 10 records the set of the unique data read from the RFID tag TG2 and the radio wave intensity as the response characteristics data in association with the transport position by performing the subsequent processes in S16 to S18.

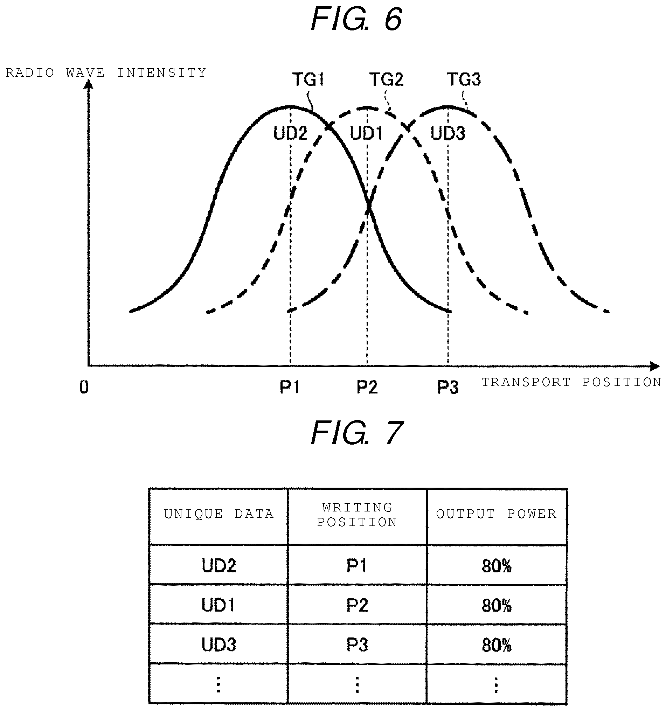

Fig. 6 is a schematic diagram illustrating an example of response characteristics data. Fig. 6 illustrates characteristics data obtained from each of RFID tag TG1, TG2, and TG3 in the arrangement order described above. Here, the horizontal axis represents the transport position of the paper PT and the vertical axis represents the intensity of the radio wave. It is assumed that writing of the unique data UD1, UD2, and UD3 is performed in the responding order of RFID tag TG2, RFID tag TG1, and RFID tag TG3.

Generally, the radio wave intensity obtained from the RFID tag TG tends to become stronger as the antenna 106 and RFID tag TG are closer to each other. Therefore, in S20, the write condition specifying unit 15 specifies the arrangement order of the RFID tags TG arranged on the paper PT based on order of appearance of the peak positions of the radio wave intensity recorded in the response characteristics data. For example, in Fig. 6, the peak positions of the radio wave intensity appear in the order of the unique data UD2, UD1, and UD3. In this case, the write condition specifying unit 15 specifies that the RFID tags TG are arranged in order of RFID tags TG1, TG2, and TG3 based on the order of appearance the peak positions of the radio wave intensity.

In addition, the peak position of the radio wave intensity corresponds to a position where the communication between the antenna 106 and the RFID tag TG can be satisfactorily performed. Here, in S21, the write condition specifying unit 15 specifies the writing position of the RFID tag TG based on the peak positions of the radio wave intensity recorded in the response characteristics data. For example, in Fig. 6, the write condition specifying unit 15 specifies the transport position P1 as the writing position of the RFID tag TG1. In addition, the write condition specifying unit 15 specifies the transport position P2 as the writing position of the RFID tag TG2. In addition, the write condition specifying unit 15 specifies the transport position P3 as the writing position of the RFID tag TG3.

In addition, when the radio wave intensity at the peak position exceeds (or falls below) a predetermined range, in S21, the write condition specifying unit 15 specifies a value for adjusting the output power such that the radio wave intensity obtainable from the RFID tag TG converges within the range. In this case, for example, the write condition specifying unit 15 specifies a decrease amount (or an increase amount) of the output power according to the intensity of the radio wave intensity at the peak position.

In S22, the write condition specifying unit 15 generates and outputs the write condition data associated with the arrangement order, the writing position, the output power, and the like for each RFID tag TG.

Fig. 7 is a schematic diagram illustrating an example of write condition data. As illustrated in Fig. 7, the write condition data stores the writing position of the RFID tag TG and the output power of the antenna 106 in association with the unique data that can identify each RFID tag TG. Here, the unique data is sorted in the arrangement order of the RFID tags TG. In addition, the output power is expressed as a percentage of a default output power as 100%.

As described above, the printer 10 acquires the response characteristics of each RFID tag TG arranged on the paper PT while the paper PT is being transported, and specifies the write condition data based on the response characteristics data.

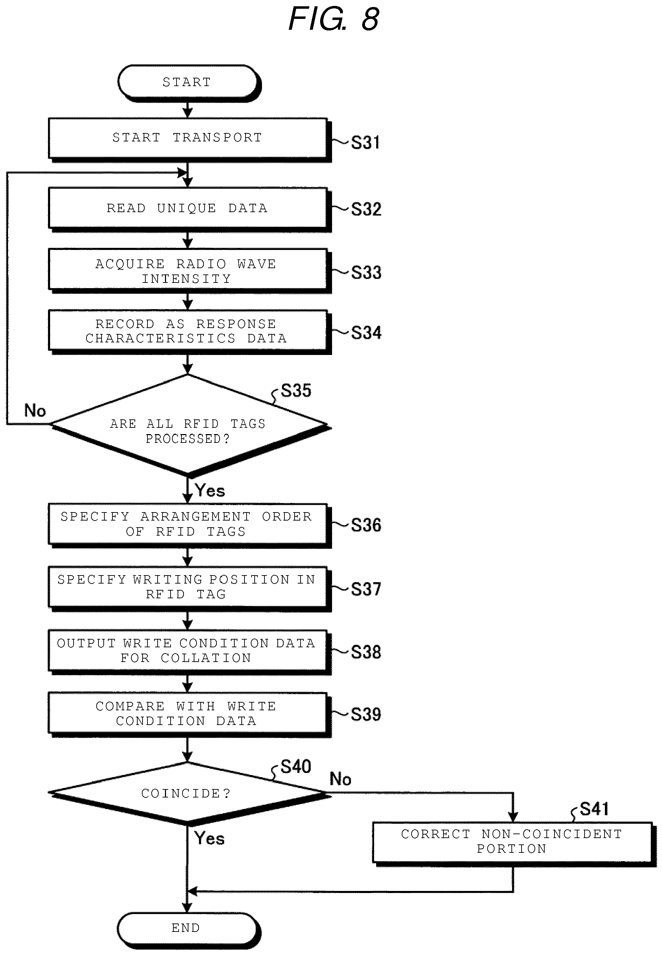

Next, the write condition verification processing performed by the verification processing unit 16 will be described. Fig. 8 is a flowchart illustrating an example of the write condition verification processing performed by the printer 10. As a premise of the processing, it is assumed that the write condition data (generated in the write condition specification processing) is held in the RAM 113, the nonvolatile memory 114, or the like.

First, the verification processing unit 16 transports the verification paper (S31). Here, the verification processing unit 16 may transport the verification paper at a speed at which the RFID tag TG can be read, by performing the control such as the intermittent transport in cooperation with the transport control unit 11.

Subsequently, the verification processing unit 16 reads the unique data from each of the RFID tags TG arranged on the verification paper (S32), and acquires the radio wave intensity of the response wave output from the RFID tag TG at the time of reading (S33). Next, the verification processing unit 16 records the set of the unique data and the radio wave intensity as the response characteristics data in association with the transport position of the paper PT at the time of reading the unique data (S34).

Subsequently, the verification processing unit 16 determines whether or not the response characteristics data for all the RFID tags TG are recorded (S35). Criteria similar to that in S19 described above can be used as the determination criteria in this context as well.

In S35, when it is determined that non-processed RFID tags TG are present (No in S35), the verification processing unit 16 returns the process to S32. In addition, when it is determined that the response characteristics data for all the RFID tags TG are recorded (Yes in S35), the verification processing unit 16 continues the process to S36.

Subsequently, the verification processing unit 16 generates and outputs the write condition data for the reference from the response characteristics data by performing the processes similar to those in S20 to S22 described above (S36 to S38). Next, the verification processing unit 16 compares the content of the generated write condition data for the reference and the content of the previously output write condition data for each same unique data (S39), and determines whether or not the two coincide with each other (S40).

Here, when the contents of the write condition data items coincide with each other (Yes in S40), the verification processing unit 16 determines that the verification is successful and ends the process. In addition, when the contents of the write condition data items do not coincide with each other (No in S40), the verification processing unit 16 corrects the non-coincident write condition based on the write condition data for the reference (S41), and ends the process. When the non-coincidence is detected, instead of immediately correcting the write condition data, the user may be notified of the non-coincidence by displaying error messages or the like on the display 108.

As described above, the printer 10 acquires the response characteristics data of each RFID tag TG arranged on the paper PT while transporting the paper PT, and specifies the write condition data for the reference based on the response characteristics data. The printer 10 compares the write condition data for the reference and the previously generated write condition data. In this way, since the validity of the write condition of the RFID tag TG can be verified, it is possible to improve the accuracy of the write condition.

The write condition data output by the above-described processing is stored in the RAM 113, the nonvolatile memory 114, or the like, and is used for data writing to the RFID tag TG.

Specifically, when writing the data into the RFID tag TG, if the printer 10 (in particular, the CPU 111) reads the unique data from the RFID tag TG while transporting the paper PT in the transport direction A, the write condition corresponding to the unique data is read from the write condition data. Then, the printer 10 (in particular, the CPU 111) adjusts the writing position of the RFID tag TG with respect to the antenna 106 and the output power from the antenna 106 by controlling the motor driver 118 and the reader/writer 121 based on the read write condition. In this way, since the position relationship between the antenna 106 and the RFID tag TG can be adjusted to a position relationship appropriate for data writing, it is possible to satisfactorily perform the data writing into the RFID tag TG.

In addition, the printer 10 may control the thermal head 104 so as to perform data writing into the RFID tag TG and to perform printing on the label L. For example, when using the label L as a price tag of merchandise, the CPU 111 writes data such as a merchandise code for identifying the merchandises into the RFID tag TG, and prints a name and price of the merchandise on the label L on which the RFID tag TG is included.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

For example, in an example embodiment described above, unique data is written into the RFID tag TG in processing S14 and S15. However, when unique data (or data similar to the unique data) is written into the RFID tag TG in advance, the unique data writing processing can be omitted. Specifically, when the unique data is written in the RFID tag TG in advance, it is possible to acquire the response characteristics data by reading the unique data while transporting the paper PT in a manner similar to the write condition verification processing described above. In addition, also when of using a unique identifier recorded in the RFID tag TG itself it is possible to acquire the response characteristics data by reading the unique identifier while transporting the paper PT in a manner similar to the write condition verification processing described above.

In addition, in an example embodiment described above, a plurality of RFID tags TG are supported by each paper PT with the labels L being already provided thereon or therewith, but embodiments are not limited thereto, and the RFID tags TG may be directly arranged on the paper PT at the predetermined intervals rather than being included with or on the labels L. In addition, in an example embodiment described above, the paper PT, which is a paper medium, is provided as separate sheets. However, the type of the medium is not limited thereto. In addition, in an example embodiment described above, the paper PT is stored as sheets in the paper storage unit 101, but embodiments are not limited thereto, and a paper roll around which paper PT is wound may be stored as the paper storage unit 101.

In addition, in an example embodiment described above, the label L is made of thermal paper, but the label L is not limited thereto, and there is no particular limitation on the material used for the label L as long as the label L is printable. The printer 10 can include a printing head or other printing mechanism according to the material of the label L.

In addition, in an example embodiment described above, a RFID reader/writer is applied to the printer 10. However, devices according to the present disclosure are not limited thereto. For example, a RFID reader/writer according to the present disclosure may be applied to an RFID reader/writer device that is specialized for reading and writing of RFID tags TG, such as a device in which a printer engine (thermal head 104 or the like) is excluded from the printer 10.

In addition, in an example embodiment described above, the output destination of the write condition data is the RAM 113 or the nonvolatile memory 114, but is limited thereto. For example, the printer 10 may output the write condition data to an external device via the communication interface 120, or may output the write condition data to a storage medium detachably attached to the printer 10 (for example, a memory card). In addition, for example, the printer 10 may print out the write condition data.

In addition, in an example embodiment described above, the write condition data generated in the printer 10 is used in the same apparatus, but embodiments are not limited thereto, and such generated data may be used by another printer. In this case, there is a possibility that the reference position, which is the reference for the writing position, may be different depending on the specification of other printers. However, the transport position suitable for the specification of the printer can be derived by correcting the writing position using an offset value in accordance with the specification of the other printers. For example, when the distance between the sensor 105 and the antenna 106 differs, it is possible to derive the transport position suitable for the specification of the other printer by correcting the transport position of the write condition using the offset value in accordance with the difference of the distance. In addition, when the output power of the antenna 106 differs, it is possible to derive the output power suitable for the specification of the other printer by correcting the output power of the write condition using the offset value in accordance with the ratio of the difference.

In addition, the program executed by the device in an example embodiment described above is provided in advance in the storage medium (the ROM 112 or the nonvolatile memory 114) already included in the device, but examples are not limited thereto, and the program may be provided by being recorded in a computer readable recording medium, such as a CD-ROM, a flexible disk (FD), a CD-R, or a digital versatile disk (DVD), as a file in installable format or executable format. Furthermore, the storage medium is not limited to a medium separable or distinct from a computer or an embedded system, and includes a storage medium from which a program transmitted via a LAN, the Internet, or the like is downloaded to be stored or to be temporarily stored.

In addition, the program executed by the device in an example embodiment described above may be provided by being stored in a computer connected to a network such as the Internet and being downloaded via the network, or may be provided or distributed via the network such as the Internet.

## Claims

1. A wireless tag reader/writer apparatus, comprising:
a roller configured to transport a sheet along a transport path, the sheet having a plurality of labels disposed thereon, each label being spaced from an adjacent label in the plurality of labels at a predetermined spacing along a transport direction of the sheet along the transport path, each label including a wireless tag;
a wireless tag reader including an antenna disposed on the transport path and configured to read identification data from the wireless tag included in a label of the plurality of labels when the sheet is transported along the transport path;
a processor configured:
to store the identification data of the wireless tag read by wireless tag reader in association with a signal intensity of a response signal of the wireless tag, and a position of the sheet on the transport path at the time of the reading of the wireless tag by the wireless tag reader; and
to specify a position of the sheet on the transport path for each wireless tag for writing data into the wireless tags, the position of the sheet being specified based on peak positions of the signal intensity in the response signal of each wireless tag stored in association with identification data.

2. The wireless tag reader/writer apparatus according to claim 1, wherein the wireless tag reader further includes:
an interrogation wave output unit configured to output an interrogation wave via the antenna while the sheet is being transported on the transport path; and
a tag writer configured to write identification data into wireless tags included in the plurality of labels in a tag sequence matching a response order of the wireless tags to the interrogation wave.

3. The wireless tag reader/writer apparatus according to claim 1 or 2, wherein an arrangement order of the wireless tags based on order of appearance of the peak positions of the signal intensity for each wireless tag is stored by the processor in association with the identification data for each wireless tag.

4. The wireless tag reader/writer apparatus according to any one of claims 1 to 3, wherein an output power of the antenna is stored by the processor in association with the identification data for each wireless tag.

5. The wireless tag reader/writer apparatus according to any one of claims 1 to 4, wherein
the sheet is transported along the transport path by an intermittent operation of the transport roller to temporarily stop the sheet along the transport path, and
the wireless tag reader reads the identification data from the wireless tags while the sheet is temporarily stopped.

6. The wireless rag reader/writer apparatus according to any one of claims 1 to 5, further comprising:
a sensor along the transport path configured to detect at least one of a front end of the sheet and a front end of a label in the plurality of labels disposed on the sheet.

7. The wireless tag reader/writer apparatus according to any one of claims 1 to 6, further comprising:
a printer configured to print on the plurality of labels on the sheet.

8. The wireless tag reader/writer apparatus according to claim 7, wherein the printer is thermal printer.

9. The wireless tag reader/writer apparatus according to any one of claims 1 to 8, wherein the wireless tag is an RFID tag.

10. The wireless tag reader/writer apparatus according to any one of claims 1 to 9, wherein the sheet is fed from a roll.

11. A method for writing data to a plurality of radio frequency identification (RFID) tags, comprising:
transporting a medium supporting a plurality of RFID tags along transport path in a transport direction;
reading identification data of each RFID tag in the plurality of RFID tags by outputting an interrogation wave via an antenna disposed along a portion of the transport path, while the sheet is being transported along the transport path;
storing the identification data read from each RFID tag in the plurality of RFID tags in association with a radio wave intensity received from the RFID tag at the time of the reading and a position of the sheet on the transport path at the time of the reading; and
specifying a position of the sheet on the transport path for writing data into a particular RFID tag in the plurality of RFID tags based on a peak position of the radio wave intensity associated with the identification data of the particular RFID tag.

12. The method according to claim 11, further comprising:
writing data into the plurality of RFID tags, via the antenna, in an order corresponding to a sequence in which the RFID tags in the plurality of RFID tags responded to the interrogation wave.

13. The method according to claim 11 or 12, further comprising:
specifying an output power of the antenna when writing of data into each RFID tag in the plurality of RFID tags based on the radio wave intensity associated with the RFID tag.

14. The method according to any one of claims 11 to 13, wherein
the sheet is repeatedly transported along the transport pathway for a predetermined distance followed by a temporary pause, and
the RFID reader reads the identification data while the sheet transport along the transport path is temporarily paused.

15. The method according to any one of claims 11 to 14, further comprising:
verifying the position of the sheet on the transport path before writing data into each RFID tag in the plurality of RFID tag.
